(19) Europäisches Patentamt
European Patent Office
Office européen des brevets

(11) **EP 2 074 256 B1**

(12) **EUROPEAN PATENT SPECIFICATION**

(45) Date of publication and mention
of the grant of the patent:
**05.04.2017   Bulletin 2017/14**

(51) Int Cl.:
***D21C 5/02*** *(2006.01)*     ***D21B 1/32*** *(2006.01)*
***D21G 9/00*** *(2006.01)*

(21) Application number: **07823139.6**

(22) Date of filing: **20.09.2007**

(86) International application number:
**PCT/FI2007/050502**

(87) International publication number:
**WO 2008/034953 (27.03.2008 Gazette 2008/13)**

(54) **FLOTATION IN RECYCLED FIBRE PROCESS**

FLOATATION IN FASERRECYCLATVERFAHREN

FLOTTAISON DANS UN PROCESSUS À FIBRES RECYCLÉES

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority:   **21.09.2006   FI 20065580**

(43) Date of publication of application:
**01.07.2009   Bulletin 2009/27**

(73) Proprietor: **Valmet Automation Oy
02150 Espoo (FI)**

(72) Inventor: **HUHTELIN, Taisto
FI-33580 Tampere (FI)**

(74) Representative: **TBK
Bavariaring 4-6
80336 München (DE)**

(56) References cited:
**EP-A1- 1 388 370        EP-A1- 1 496 154
EP-A1- 1 496 154        WO-A1-95/08019
WO-A1-2005/042831        US-A1- 2002 056 531
US-A1- 2002 056 531        US-A1- 2004 200 778**

**Description**

FIELD

The invention relates to a recycled fibre process, in which recycled fibre pulp is cleaned by flotation.

BACKGROUND

A recycled fibre process is also called an RCF (Recycled Fibre) line, and it refers to a production process with which recycled paper is made into printing paper raw material mainly for newspapers and magazines.

Reclaimed newspapers, advertising leaflets and magazines may be used as raw material for an RCF line. The quality of reclaimed paper varies depending on where and how it has been reclaimed. Reclaimed paper contains impurities and its moisture content varies. The age of the paper also affects significantly the quality of the produced pulp.

From paper storage the reclaimed paper is fed on belt conveyors to a continuous rotating drum pulper in a quantity corresponding to the desired production rate. In pulping, the fibres in the recycled fibre pulp are separated from each other by chemi-mechanical processing. At the same time, the fibres are also de-inked.

After pulping, the recycled fibre pulp is cleaned by cyclones and screens, for example. The cleaned and diluted pulp is led to flotation that will remove the free ink.

In a single flotation cell, the pulp is mixed with a rotor or pump, and air is fed to the pulp in such a manner that the amount of air and size of air bubbles is as desired. From the flotation cell, the reject that contains water, ink particles, filler, and fibres is discharged over the rim of the flotation cell and collected in a reject tray. The reject may be separately foamed and its accept returned back to the start of the flotation.

After this, slotted screens, for instance, are used to try to remove stickies, and in a dispersing step, ink particles remaining in the fibres may be detached. After dispersing, the ink detached from the recycled fibre pulp may be removed by re-flotation. The dirty water is removed and the pulp is then bleached and pumped in to papermaking.

Because the quality of the raw material fed to the recycled fibre line varies greatly, the use of chemicals and mechanical processing are not optimised for flotation in particular. The situation is also made worse by the fact that not much automation is traditionally used in recycled fibre processes. Thus, the deficient control of flotation and other processes affecting flotation in a recycled fibre line lead to a poorer end-product quality than what the present equipment and raw materials per se are able to produce. Deficient flotation and control of other processes affecting flotation in a recycled fibre line is further hindered by shutdowns and start-ups of the product line.

US2002056531 (A1) discloses a method for carrying out of a flotation, bleach and/or dispersion process serving for the manufacture of fiber or paper while using one or more method stages in which process steps defined by pre-settable chemical and physical routines are carried out and process optimizations are made in dependence on measured values and characteristic values formed therefrom, optionally while using state models, at least the measured values of at least one method stage, which relevantly affect the target values of the respective end product of the method, are detected online and/or the characteristic values determined from the measured values of at least one method stage are evaluated online and used directly or indirectly for the control or optimization of at least one process, with characteristic values being formed in dependence on the starting materials or raw materials and/or on the chemicals, auxiliary materials, energies and/or materials and emissions to be disposed of, which are added in at least one method stage.

EP1496154 (A1) mentions a process determining loss of solids and/or fibres during a paper fibre suspension floatation (1) or thickening process. The paper fibre suspension is sub-divided during floatation or thickening into accepted and rejected fractions. The proportion of ash or fine solids present at the feed (E1) is measured by sensors and compared with the similar values measured by a sensor at the acceptance point (A1). The comparison is made using an in-line or on-line computer system and gives a value for the loss of fibres and/or solids as a quotient. The amount of ash and solids in the rejected fraction is determined by laboratory measurements.

WO9508019 (A1) discloses a device for controlling a deinked cellulose production plant with state analyesrs constituted of neural networks for the waste paper suspension. At least one measurement arrangement (ME) detects spectral and/or physical characteristic values (Omf, Mp) of a waste paper suspension (PS). The plant also has arrangements (RS1...RS8) for controlling waste paper preparation (AAA) operating means. At least one state analyser (ZA) for the waste paper suspension is designed as one (Nng) or several parallel (NN1...NN4) neuronal networks. The state analyser (ZA) derives from the characteristic values (Imf, Mp) actuating variables (ST:AB, AZ, FL, AA, AS, AT) for controlling the operation of arrangements (RS1...RS8) for regulating or controlling operating means of at least the waste paper preparation process (AAA). The ratio between white and couloured paper (AB), the ratio between magazine and newspaper paper (AZ), the mean fibre length (FL), the ash proportion (AA), the proportion of dirt (AS) and/or the proportion of sticky dirt (AT) in the waste paper suspension (PS) are particularly suitable as actuating variables.

BRIEF DESCRIPTION

It is an object of the invention to provide an improved solution for flotation in a recycled fibre process. This is achieved by a control method according to claim 1. The invention also relates to recycled fiber line comprising a controller according to claim 8.

Additional preferred embodiments of the invention are disclosed in the additional dependent claims.

The method and system of the invention provide several advantages. The control of the flotation in particular of the recycled fibre line becomes more effective and the controllability of the flotation improves which improves the quality of the end-product and makes the shutdown and start-up of the product line faster.

LIST OF FIGURES

The invention will now be described in greater detail by means of preferred embodiments and with reference to the attached drawings, in which

Figure 1 shows a recycled fibre process,
Figure 2 shows the principle of optical measurement,
Figure 3 shows a flotation step,
Figure 4 shows pulp circulation in the flotation step,
Figure 5 shows flotation of ink, ash, and fibres,
Figure 6 is a block diagram of process control,
Figure 7 shows an embodiment of optimisation, and
Figure 8 is a flow chart of the method.

DESCRIPTION OF EMBODIMENTS

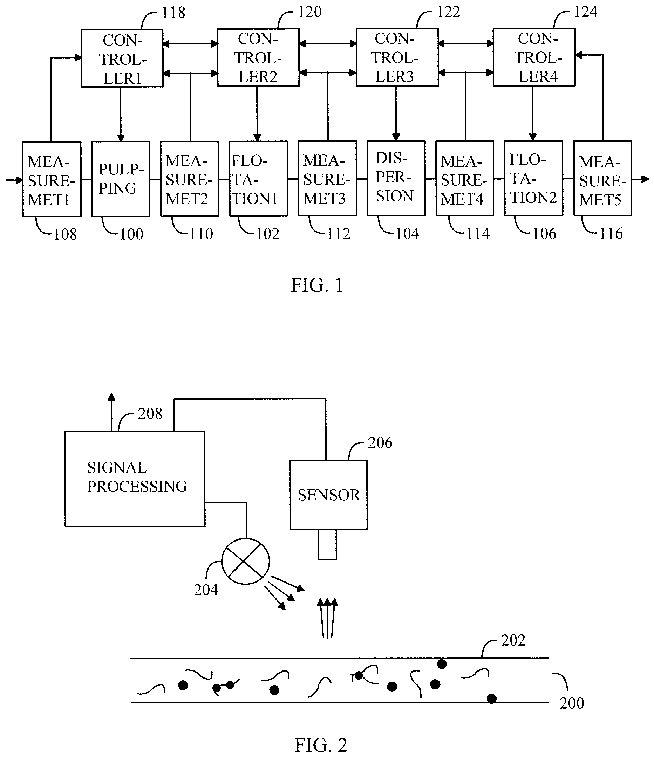

Let us first examine a recycled fibre line in general by means of Figure 1. The most essential parts of the recycled fibre line for the present solution are the flotation sub-processes.

The recycled fibre line may comprise the following processes. Initially, the reclaimed raw material, such as newspapers, advertising leaflets, and magazines, may be fed into a pulping process 100 that has a pulper to mix the raw material with water in such a manner that the consistency of the recycled fibre pulp becomes 5 to 18 %, for instance, depending on the used pulping method. The pulping process 100 aims at chemi-mechanically disintegrating the raw material into recycled fibre pulp in which fibres and ink are dispersed into separate particles. Typically the higher the consistency is, the more efficient the use of chemicals is. The temperature of pulping also affects good dispersion.

Several chemicals may be fed into the pulping process 100 to separate the particles from each other. With sodium hydroxide it is possible to raise the acidity of the recycled fibre pulp to pH 9 to 10. The sodium hydroxide then makes the fibres swell, saponifies ink and facilitates the detachment of printing ink. Liquid glass, or sodium silicate, in turn facilitates the detachment of printing ink and stops it from re-attaching. At the same time, it buffers the pH to a desired level. Sodium silicate also affects the success of flotation, because it may act in a versatile manner by, among other things, affecting the dispersion and size of ink particles, acting as a collector in flotation, reducing fibre loss and acting as a filler depressant. Hydrogen peroxide that is typically used in bleaching pulp prevents the pulp from yellowing during pulping. Other chemicals, typically surfactants, for instance, may also be used. Indicators of the success of pulping are: how well have the fibres detached from each other, does pulping damage the fibres, how well has ink detached from the fibres and fillers and coating paste, and how well has ink degraded. In pulping, these issues may be acted on mechanically and chemically.

Mechanical means in the success of pulping are pulp travel rate in the drum, i.e. production rate, pulp consistency in the drum, and rotating rate of the drum. Chemical means are in turn pulp pH in the drum, which is based for example on the dosing of sodium hydroxide, dosing proportion of silicate, and pulp consistency (amount of water) and temperature.

After pulping, the recycled fibre pulp may be cleaned with cyclones and screens that are typically fast-rotating slotted screens. The cleaned and diluted pulp may be led to a first flotation process 102 whose task it is to remove the free ink, for instance, by flotation. One or more flotation machines may be used in the first flotation process.

After this, slotted screens are used to try to remove stickies (no shown in Figure 1). With a disc filter and presses, dirty water is led to further processing and the obtained high-consistency pulp is dispersed. This ends a first water circulation. The dirty water is cleaned and new water is added from a second water circulation to the containers from which the water is pumped to consistency control of the processes.

The second water circulation starts from the dispersing process 104. The task of the dispersing process 104 is for instance to chemi-mechanically detach any ink particles still attached to the recycled fibre pulp fibres. For mechanical processing a disperser in the dispersing sub-process may contain a stator and a rotating rotor whose blades work the pulp, and as the pulp moves between the blades, its speed changes rapidly. Thus, mechanical stress is directed to the fibres and de-inks them. At the same time, the aim is to detach stickies from the fibres and make the ink particles smaller. Properties of pulp, such as freeness, may also change depending on the dispersing sub-process (disperser and/or dispersing method).

Indicators of the success of dispersion are: how well have the fibres detached from each other, does dispersing damage the fibres, how well has ink detached from the fibres and fillers and coating paste, and how well has ink degraded. In dispersing, the separation of fibres and ink may primarily be affected by mechanical means. Mechanical means include pulp travel rate through the dispersing sub-process, i.e. production rate, pulp consistency in the dispersing sub-process, pulp temperature in the dispersing sub-process, rotor rotation rate, and power supplied to the rotor. The power supplied to the rotor is typically controlled by controlling the gap between the rotor and stator, through which pulp runs.

After dispersing, the recycled fibre pulp may be fed into a second flotation process 106. One or more flotation machines may be used in the second flotation process. Before, during, and/or after each process, measurements related to the quality of the recycled fibre pulp may be made with measuring devices 108 to 116 which may be located at different measuring points of the recycled fibre process. The measuring devices 108 to 116 may be different sensors that produce a plain measuring signal, or devices capable of pre-processing measuring results. The measuring devices may measure the properties of the recycled fibre pulp fibres, ink, or ash, the brightness and freeness of the recycled fibre pulp, stickies' properties, the level of the recycled fibre pulp at different locations, electrical conductivity, flow rates, flow velocity, etc. The measuring devices 108 to 116 may feed the measuring signals to one or more controllers 118 to 124 that utilise the measuring results in adjusting the process they control.

Let us now examine more closely the measurements that may possibly be made with the measuring devices 108 to 116 in the recycled fibre process. Measurements used in estimating and adjusting the quality of the recycled fibre pulp and the state of the process may be made in the recycled fibre line. Measurements describing fibre properties include measuring the length and length distribution of the fibres, freeness, number of fibre bundles, fractions, and brightness. Of these, the brightness measurement may also measure an ink property (ink attached to the fibres). Most of these measurements may be made optically, and the measurements may be continuous. Measurements may be taken from the feed, reject, and accept, wherein accept refers to the part of recycled fibre pulp accepted for further processing, and reject refers to the part of recycled fibre pulp not accepted for further processing.

The measurement of total, i.e. effective, ink in the pulp or removed ink may be made using the ERIC (Effective Residual Ink Concentration) method. Together with a fractionator, this measurement may also measure free ink. The measurement may be made as an optical radiation measurement, in which optical radiation at a desired band is directed to the pulp and the intensity of the reflected radiation is measured. Optical radiation may be infra-red radiation whose band is selected so that at the used band the absorption coefficient of the ink in the pulp is higher than that of the fibres or other particles in the pulp. The infra-red radiation band may be 700 to 1500 nm, without limiting it to this range, however. An ERIC measurement may be taken from the feed, accept, and/or reject of the flotation step. These measurements provide a good idea of the ink removed in the flotation step, but they do not necessarily say anything of the quality of the ink in the accept. With the measurements, it is possible to form a difference between the ERIC measurements of the feed and accept in the flotation step, the difference between the quantity of free ink in the feed and accept in the flotation step, a parameter formed from the ERIC measurement of the flotation step accept, and a difference between the brightness measurements of the feed and accept in the flotation step. In addition to or instead of the ERIC measurement, the quantity of ink may be estimated with brightness measurement.

It is also possible to measure from the recycled fibre pulp the amount or proportion of ink attached to the fibres and the amount or proportion of free ink detached from the fibres. The measurement may be made optically in such a manner that an image is formed from which it is possible to determine with the help of a suitable image processing program the number, proportion and/or interrelation of particles of different sizes and colours. This type of solution is shown in US patent 6,010,593, wherein this measurement is described in more detail.

By dividing with a fractionator the recycled fibre pulp into particle classes, it is possible to determine from the divided particles whether they are ink particles or not. Typically ink attaches to large particles, but small particles are ink particles. Thus, by measuring the number of small particles, it is possible to determine the amount of free ink. This type of solution is presented in US patent 5,087,823, wherein this measurement is described in more detail. The majority of the free ink particles may be removed from the recycled fibre pulp by flotation. In most cases, the diameter of such ink particles that may be removed by flotation is in the size range of 10 to 100 mm. With a fractionator, it is possible to measure from reject a fibre quantity that represents the removed fibre proportion, and to enter this information to the multivariable controller.

The pH of the pulp may be measured from the feed of the flotation step in a manner known per se. In addition, the pH may be adjusted. Similarly, it is possible to measure the consistency of the pulp and adjust it as desired. Many flotation machines require a specific flow velocity, in which case it is possible to adjust the volume flow of the pulp going in to the first cell and to allow the consistency to vary within the allowed range. Consistency measurement may be made with measuring methods known per se.

The ash proportion, i.e. filler proportion, of newspapers may vary from 0 to 15%, while the ash proportion of magazines and uncoated fine paper is 24 to 36%, and that of coated fine papers may even be 60%. As reclaimed paper contains all these paper grades to a varying extent, it is clear that the ash proportion of the paper entering the pulper varies greatly. The operators of a newspaper machine do not always want to add fillers, but try to standardise the ash going into the machine to a desired level. Typically this means that the amount of ash going to reject during flotation also needs to be controlled. The measurement of the ash proportion in a paper machine with optical measuring devices is known per se. However, it is possible to measure in this manner not only the ash proportion after flotation, but also the ash proportion in the feed, accept and/or flotation process.

In many lines, ash removal may be done so that a certain ash level and variation is reached in the pulp fed to the paper machine. On-line measurement of ash with optical measuring devices is known, and it is possible to measure ash from feed before flotation and from accept after flotation and calculate from these quantities the amount of removed ash by again simulating the through-flow of the process in a rejectless case.

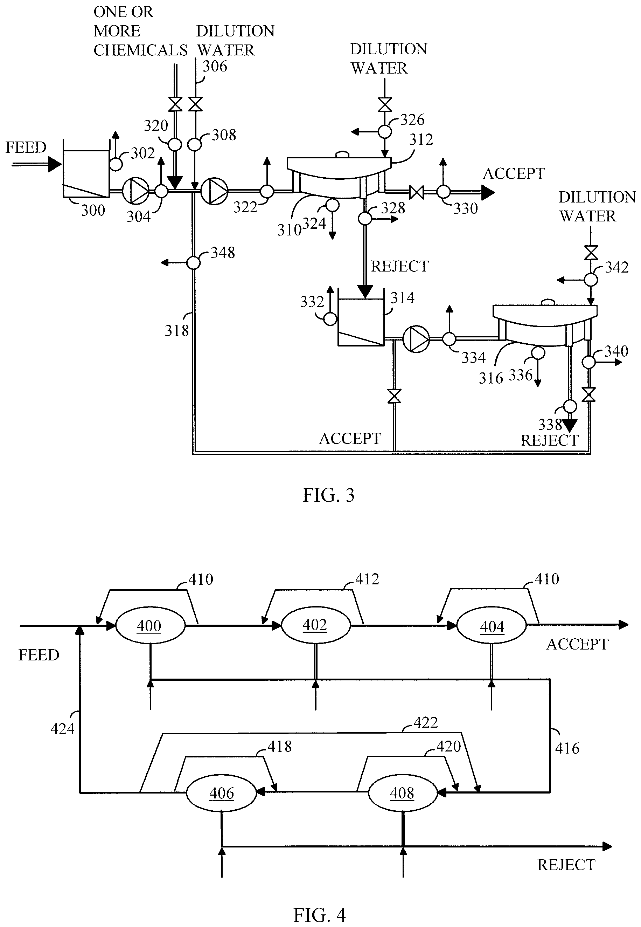

The level of a flotation cell may for instance be measured by means of a pressure sensor installed at the bottom of the flotation cell (reference numbers 324 and 336 in Figure 3).

It is also possible to measure the level of reject (reference number 328 in Figure 3) in the foam collection tray (reference number 312 in Figure 3) and reject container (reference number 314 in Figure 3), to which reject may flow. The measurement may be made in the same manner as the flotation cell level measurement, but the measuring result may be interpreted as the amount of reject exiting the flotation cell. One solution relating to the adjustment of the flotation cell and foam collection tray levels is presented in published US patent 2004/0200778A1.

The flotation step must process all material from the previous steps, so the pulp fed into the flotation machine varies all the time. Traditionally the flotation machine has been controlled by keeping the level of the foam collection tray constant and by controlling this level by adjusting the level of the flotation cell. Therefore, the quality of the material passing through the flotation cell in a time unit varies even though the through-flow of the flotation step remains constant.

The flow rates of the pulp fed into the flotation machine and the accept may be measured and their difference may be considered the amount of removed reject. The measuring of the air in the accept may indicate the formation of the size of bubbles. This is shown in such a manner that bubbles that are too small do not rise to the surface of the flotation cell, but exit with the accept.

Measuring the foam in the flotation cell is not usually done, but by photographing the foam with a camera, information on the foam properties may be used in adjusting the process. Conductivity of the foam layer may in turn represent the amount of water in the foam.

In addition to or instead of the measurements, a process model may be used. It is for instance possible to form with a multivariable controller for control an estimate of removed water and/or an estimate of the removed fibre proportion according to a process model. If the removed fibre proportion is higher (or lower) than desired, it is possible to change the situation with process control. Removed water, in turn, indicates the amount of reject, because the majority of reject is water.

Figure 2 shows the general principle of optical measuring methods, but to the appropriate extent it is also suitable for depicting other measurements. Recycled fibre pulp 200 may be directed into a pipe 202 which may be transparent at the wavelength used in optical measurement. As the recycled fibre pulp advances in the pipe 202, radiation may be directed to it, if this is necessary for the measurement. The radiation may be produced by a radiation source 204 that may be an optical power source, such as an LED, incandescent lamp, gas-discharge lamp, laser, or the like. However, the radiation source is not always necessary. The actual measurement may be made with a sensor 206. The sensor 206 can, in the case of optical measurement, be a camera 206 that takes a picture or pictures of the recycled fibre pulp 200 in the pipe 202. Generally, the sensor may also be a pressure sensor, flow-measuring sensor, conductivity-measuring sensor, etc., in which case it is often attached to the measuring point as opposed what is shown in Figure 2. A signal-processing unit 208 may control the sensor 206 and possible radiation source 204 and process and analyse the measurement signal received from the sensor. In measuring the length of the fibres and the size of the ink particles, it is possible to use as the pipe 202 a capillary pipe with a diameter of less than a millimetre to a couple of millimetres. In other measurements, the diameter of the pipe 202 may be larger, even several centimetres.

The sensor 206 may also be a spectrometer that defines the spectrum of optical radiation reflected by each fraction. The colour, brightness, etc. of the particles, and thus any desired property, may be determined from the spectrum.

The radiation source 204 shown in Figure 2 may direct a suitable energy to each fraction to obtain an acoustic response signal from the sample particles. The source 204 may for instance be a laser whose optical radiation causes acoustic vibration in the particles. Instead of being a camera 206, the sensor may also detect acoustic vibration. Usually acoustic vibration is ultrasound. The frequency, amplitude and/or phase of acoustic vibration depend on the properties of the particles.

Let us now examine the flotation process 102, 106 a little closer by means of Figure 3. The flotation process requires three phases: solid, liquid, and gas, and correspondingly the interfaces between them: solid-liquid, solid-gas, liquid-gas, and solid-liquid-gas. The hydrophobicity and hydrophilicity of the solid particles at the solid-liquid-gas interface determines the wettability (contact angle) of the solid particles. In practice, this contact angle determines the suitability of a particle for flotation. To obtain sufficient separation in flotation, it is possible to use "collector" chemicals whose task is to selectively improve the hydrophobicity of the solid particles. Hydrophobic particles attach to the surface of air bubbles, rise to the surface of the flotation cell, and exit over the flotation cell edge to reject. Collectors are often heteropolar organic agents that contain both polar and non-polar groups. The collector attaches to a solid particle with its polar end. For instance sodium soap acts in flotation as a collector that has a non-polar hydrocarbon group R (e.g. $C_{17}H_{33}$) and a polar carboxyl group (COONa).

It is also possible to use "modifier" chemicals. These include activators, depressants, dispersing agents, and agents used to adjust pH. The task of an activator is to re-form the surface of a solid particle to be suitable for the attachment of a collector chemical. A depressant forms a "protective cover" on the surface of a solid particle, and the particle becomes hydrophilic or does not want to attach to a collector. This way, it reduces the probability of the particle of ending up in reject. It is possible to use silicate, for instance, as the depressant of carbonate and CMC (carboxy-methyl cellulose) as the depressant of kaolin.

During the development of process models, the models suitable for adjustment need to be simplified so as to obtain well-defined, simple and, at the same time, reliable models for adjustment. Chemical components used in modelling include the Ca++ ion formed of calcium chloride, OH- formed of lye, RCOO- formed of sodium soap, and the silicate ion formed of liquid glass.

Paper being processed also contains several corresponding components that may be both unknown and uncontrollable for process control. Because of this, there are no easy solutions for flotation modelling.

During flotation, consistency may be made sufficiently low, typically approximately 1.2%. Flotation may be done in a flotation machine 310 that represents a primary flotation process and in which recycled fibre pulp may be mixed with a rotor and air may be fed into the pulp in a desired quantity and with a desired air bubble size. There may be several flotation cells in a flotation machine.

The formed air bubbles may lift not only ink, but also water, fibres, and fillers to the foam layer. In flotation machines 310, 316, air is fed to the recycled fibre pulp sufficiently as air bubbles of suitable size. In addition, the intention is to make the air bubbles mix evenly in the space of each flotation cell. This way, a sufficient impact probability between the bubbles and particles attaching to the surface of a bubble may be achieved, because only the impact of a particle and an air bubble enables attachment between particles and that the air bubble lifts the particle to the flotation layer for removal. In modelling, it is also possible to use an impact distance, which refers to the sideways distance over which a particle may attach to an air bubble. Electrical and chemical forces affect this distance as well as the size and speed of the air bubble and particle.

Air bubbles formed in each flotation cell are, however, unstable and break easily or unite into larger bubbles. The purpose of flotation chemicals is to optimize air bubbles so that they stay at a suitable size to handle the conditions of the flotation cell, but break sufficiently easily in the reject tray and the following pumping container. Reclaimed paper often contains enough chemicals and components that act as frothers, so the purpose of any added chemicals is usually to reduce the effect of the frother. For instance sodium soap acts as such a reducer of froth.

When recycled fibre pulp is fed from a feed container 300 towards the first flotation machine 310, the amount of recycled fibre pulp in the feed container 300 may be measured with a measuring device 302. The measuring device 304, in turn, may for example measure the properties of the recycled fibre pulp fed into the process. These measuring devices correspond to the measuring devices 110 and 114 of Figure 1. The measurement of the measuring device 304 may be optical, for instance, and the measurement may determine the consistency of the recycled fibre pulp. After the consistency of the recycled fibre pulp is determined, the measuring device 304 (or process control) may direct enough water to be fed from a water pipe 306 to the recycled fibre pulp to achieve a constant flow of the recycled fibre pulp. The amount of water fed to the recycled fibre pulp from the pipe 306 may be measured with a measuring device 308. Different chemicals may be added to the recycled fibre pulp before the first flotation machine 310.

From the first flotation machine 310, reject, which contains water, ink particles, fillers, and fibres, exits as foam into the foam collection tray 312, from which it is collected to a reject container 314. The air bubbles in the reject may be broken by means of a water spray and the reject led to a second flotation machine 316 that represents secondary flotation and from which the formed reject may be removed and the formed accept may be returned to the first flotation cell 300 along the pipe 310. The ink content of this return circulation should be kept nearly equal to the ink content of the feed that may be measured with a measuring device 348. From the return circulation of the pipe 318, the accept of the second flotation may be fed back between the reject container 314 and second flotation cell 316 to keep the level of the reject container 314 at a predefined value and unchanged. This way, cleaning may be done well under all conditions.

The location of possible other measuring devices 320 to 340 is shown by circles marked in Figure 3, and measurements may be made on one or more properties of the recycled fibre pulp. The dosage of each chemical may be measured with the measuring device 320. Before flotation, the measuring device 322 may measure from the recycled fibre pulp the amount of ink or some other property. The level of the first flotation cell may be measured with the measuring device 324. The amount of water used to remove reject foam may be measured with the measuring device 326. At least one property of the reject from the first flotation cell may be measured with the measuring device 328 and, correspondingly, at least one property of the accept from the first flotation cell may be measured with the measuring device 330. The degree of fullness or level of the reject container 314 may be measured with the measuring device 332. At least one property of the recycled fibre pulp going in to the second flotation cell may be measured with the measuring device 334. The level of the second flotation cell may be measured with the measuring device 336. At least one property of reject may be measured with the measuring device 338 and at least one property of accept may be measured with the measuring device 340. The amount of water used to remove reject foam may be measured with the measuring device 342. Because it takes recycled fibre pulp time to move from one measuring point to another, the measurements may be synchronised in such a manner that when measuring with the measuring device 322 at a given moment, it is possible to measure with the measuring device 330 in synchronisation after a predefined delay such that the delay is determined by the travel time of the recycled fibre pulp between the measuring devices. Synchronisation may also be used in matching simulation results or various estimates with each other or the measuring results.

Process management and control are made more complex by possible circulations in the flotation step, which return material back to an earlier step to make the flotation process more favourable.

Figure 4 shows a simplified diagram of circulation. In this example, the flotation process, which may be pre-flotation 102 or post-flotation 106, comprises five flotation cells 400 to 408. The primary flotation steps 400 to 404 have feedbacks 410 to 414, in which some of the accept of each flotation is fed back to flotation. In addition, the reject 416 of the primary flotation steps 400 to 404 is foamed in the secondary flotation steps 406 to 408, each of which may have its own feedback 418, 420. The flotation process may also have a common feedback 422. The accept 424 of the secondary flotation processes 406 to 408 may be fed back to the start of the flotation process.

Ink particles are often hydrophobic by nature and generally foam first. Models based on foaming rate coefficients are often used in modelling flotation processes.

The operation mechanism of flotation may be shown as a series of three sub-mechanisms:

- Approach and impact of a particle and bubble
- Bursting of the thin water film between the particle and bubble and their union
- Stabilisation of the particle-bubble pair and its successful move to the foam layer.

The efficiency, i.e. probability, of flotation for one foamed component, such as ink, may be calculated as a product of the probabilities of the sub-mechanisms as follows:

$$ P = P_y \cdot P_c \cdot P_a \cdot P_s = N_R/N_0 = 1 - N_A/N_0, \qquad (1) $$

wherein $P_y$ is the overrun probability of the flotation cell rim, $P_c$ is the impact probability of the bubble and particle, $P_a$ is the probability of the particle uniting with the bubble, $P_s$ is the probability of bubble taking the particle with it to the foam layer, $N_0$ is the total number of particles, $N_A$ is the number of unfoamed particles, and $N_R$ is the number of foamed particles. Probability $P_y$ relates to the level of the flotation cell that may be directly measured. The rise of the particle-bubble pair to the foam layer requires that the specific weight of the pair be smaller than that of water. If the particle size is too small, the inertia of the ink particle is irrelevant. Therefore, a particle tends to follow a flow line around an air bubble. This leads to a very small probability of an impact between the particle and air bubble and of the bubble transporting the ink particle to the foam layer. The probabilities may be influenced by chemicals and mechanical processing.

Flotation may be depicted as a process of the first order according to equation (1):

$$ \frac{dN}{dt} = -k_x N \rightarrow \frac{N}{N_0} = e^{-k_x \cdot t} \qquad (2) $$

wherein N is the number or proportion of foamable solid matter particles in the recycled fibre pulp at time t starting from the start of flotation, $N_0$ is the total number or proportion of foamable particles in the recycled fibre pulp at the start of flotation, and $k_x$ is the flotation rate constant of the particles x.

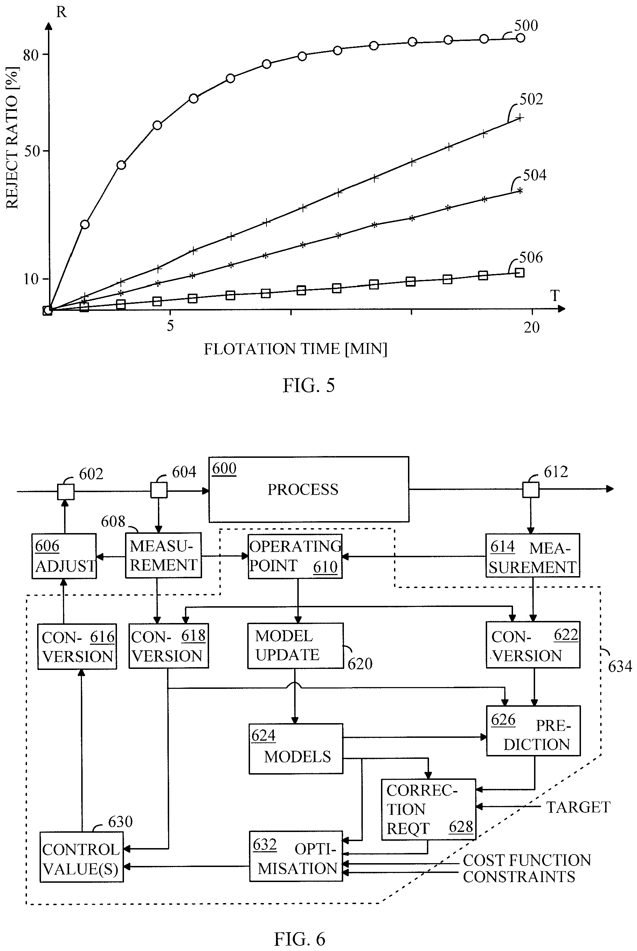

Figure 5 shows flotation time dependencies for some particles with different foaming rate coefficients $k_x$. The vertical axis shows the percentage of the reject proportion R of pulp and the horizontal axis shows the flotation time T in minutes. According to curve 500, ink foams fastest. Foaming curves 502, 504 of ash and foaming curve 506 of fibres follow the shape of curve 500, but the increase in reject is slower as a result of there being less free bubble surface available for ash and fibres, as ink takes it up quickly. The curves are of formula:

$$N_{es} = 1 - e^{-k_x \cdot t},\qquad(3)$$

wherein $N_{es}$ is the relative proportion of foamed particles. By way of example, there are two foaming curves of ash. Curve 502 shows ash foaming under the influence of different chemicals than those used during the measurement of curve 504. The behaviour according to curve 502 is obtained if no depressant chemical of ash (such as sodium silicate) is added to the recycled fibre pulp. However, if a depressant chemical of ash is added, foaming slows down and the behaviour may be as shown in curve 504. To control flotation, ash (i.e. filler) may be divided into independently behaving components with respect to flotation, for instance to a carbonate-based filler and a kaolin-based filler. Different fillers then separate by means of different foaming rate coefficients $k_x$.

The foaming rate coefficients $k_x$ relative to the solid matter particles x may be determined as follows:

$$VC_{xa} = Q_iC_{xi} - Q_aC_{xa} - k_x VC_{xa},\qquad(4)$$

wherein V is the volume of the flotation cell, $Q_i$ is the volume flow of the recycled fibre pulp into the flotation cell, $Q_a$ is the flow of the accept of the recycled fibre pulp from the flotation cell, $C_{xa}$ is the consistency of the accept in relation to agent x, and $C_{xi}$ is the consistency of the flow into the flotation cell in relation to agent x. From this, the foaming rate coefficient $k_x$ may be produced as follows:

$$k_x = \frac{Q_i \cdot C_{xi} - Q_a \cdot C_{xa}}{V \cdot C_{xa}}.\qquad(5)$$

The foaming rate coefficient $k_x$ is also dependent on, among other things, the impurities of the recycled fibre pulp, the temperature, and the structure of the flotation cell. Further, the foaming rate coefficient $k_x$ is dependent on many other factors, for example as follows:

$$K_x = f(H1, H2, Che1, Che2, Che3, B, A),\qquad(6)$$

wherein H1 is the level of the primary flotation cell, H2 is the level of the secondary flotation cell, Che1 is a chemical 1 affecting foaming, Che2 is a chemical 2 affecting foaming, Che3 is a chemical 3 affecting foaming, B is the size distribution of air bubbles, and A is the amount of air and/or number of air bubbles. The foaming rate coefficient $k_x$ may also depend on other variables.

The used chemicals may be divided into frothers, collectors, and depressants. Several chemicals that are used in the recycled fibre line act in different ways in different situations. Chemicals or their effects may also be added or removed in other steps than the flotation process.

Function f in formula (6) may be defined generally or process-specifically by testing, simulation, or theoretically. When the effects of at least one variable to the process have been defined at least to some extent, the flotation process and possibly also processes affecting the flotation process may be adjusted by means of measuring information, target, and predefined dependency f with the multivariable controller. Since the process is multivariable and has numerous circulations, it is possible to use model predictive control (MPC), or general predictive control (GPC), for instance. Multivariable solutions of PID controls, fuzzy logic and/or non-linear solutions, such as neural networks, may be used alone or together with other solutions.

With formula (6), reject proportions ΔRejos1 to ΔRejosN of the agents (fibres, ink, ash, water, etc.) removed in flotation may be described as follows:

$$\Delta Rejos1 = R11\Delta H1 + R12\Delta H2 + R13\Delta Che1 + R14\Delta Che2 + R15\Delta Che3 + R16\Delta B + R17\Delta A$$

$$\Delta Rejos2 = R21\Delta H1 + R22\Delta H2 + R23\Delta Che1 + R24\Delta Che2 + R25\Delta Che3 + R26\Delta B + R27\Delta A +$$

$$+\ldots$$

$$\Delta RejosN = RN1\Delta H1 + RN2\Delta H2 + RN3\Delta Che1 + RN4\Delta Che2 + RN5\Delta Che3 + RN6\Delta B + RN7\Delta A.$$

Thus, function f in formula (6) may be expressed by means of coefficients R11 to RN7 that may be defined by testing, simulation, or theoretically. Herein, index 1 to N refers to each agent removed in flotation.

In process control, the foaming rate may be altered by means of chemicals, for instance. A multivariable controller may adjust the dosage of at least one of the following collector chemicals into the process: calcium chloride, calcium hydroxide, sodium soap, free calcium ion, and calcium soap. The dosage of free calcium ion may be determined on the basis of calcium carbonate, for example. The dosage of calcium soap can, in turn, be determined on the basis of the used chemicals (for instance by measuring the dosage of sodium soap and calcium chloride). A multivariable controller may also adjust the dosage of at least one of the following frothers into the process: sodium soap, and agent increasing surface activity. In addition, a multivariable controller may adjust the dosage of a special depressant that prevents ash from foaming, or the dosage of sodium silicate, the dosage of carboxy-methyl cellulose, or the dosage of a combination thereof.

In process control, the foaming rate coefficients may also be altered mechanically. A multivariable controller may adjust the level of the flotation cell, size of air bubbles, amount of air, quantity of air bubbles, flows, and consistencies so as to make flotation as selective and efficient as possible. The adjustment of the fluid level of the flotation cell, performed by means of a control valve controlling the accept flow, may be based on the measurement of the fluid level of the flotation cell measured by means of pressure measured from the bottom of the flotation cell. The quantity and size of air bubbles may be acted on chemically in addition to mechanical adjustment, which includes for instance adjusting the pressure of the input air and changing the size of the nozzle feeding the air, changing the rotation speed of the rotor, etc. The quantity of air bubbles may be adjusted as a function of the amount of air fed into the flotation cell and the amount of air measured in the flotation cell. The size of the air bubbles may be adjusted as a function of the proportion of air measured from the accept of the flotation cell and a quantity calculated from the flotation cell accept by means of a model. Multivariable control may also control the size of the air bubbles as a function of the air proportion measured from the accept of the flotation cell and a quantity calculated from the accept of the flotation cell by means of a model. It is also possible to adjust the duration of the flotation process with multivariable control.

According to Figure 5, control may look for an optimal flotation time, for instance, which corresponds to looking for the suitable amount of reject for removal from each cell. It is then possible to aim at removing ink in the first flotation step (flotation machine 310) as thoroughly as possible and at trying to keep the fibres, and in the second flotation step (flotation machine 316) to aim at removing ash to the necessary extent. This aims at finding the suitable chemical dosages and mechanical processing to make the process behaviour described by curves 500 to 506 perform efficiently. If each flotation machine uses two flotation cells, the ink foaming rate coefficient $k_{ink}$ in the first flotation cell may be $k_{ink}=0.8$, for instance, the ash foaming rate coefficient $k_{ash}$ may be $k_{ash}=0.3$, for instance, and the fibre foaming rate coefficient $k_{fibre}$ may be $k_{fibre}=0.02$, for instance. In the second flotation cell, the ink foaming rate coefficient $k_{ink}$ may be $k_{ink}=0.6$, for instance, the ash foaming rate coefficient $k_{ash}$ may be $k_{ash}=0.15$, for instance, and the fibre foaming rate coefficient $k_{fibre}$ may be $k_{fibre}=0.08$, for instance. These values can, however, be widely adjusted, but often a change of $\pm30\%$, for example, is enough. It is thus possible to remove approximately 70 to 80 % of ink from the flotation machine to reject, while adjusting the reduction of ash and fibres in a controlled manner. For instance 15 to 30% of ash may be removed to reject and, even though fibres should usually not be lost, approximately 4 to 6% of fibres may end up in reject.

The efficiency of the flotation processes may be examined on the basis of how well has the foamable ink (free ink) been removed to reject and how well have the fibres been recovered to the accept of the process step. Ash processing in flotation is also important. Ash often needs to be adjusted to a certain level in the pulp going in to a paper machine. Each of these quantities has its own significance in papermaking. In addition, the significance of the different quantities varies depending on the situation.

A recycled fibre line usually makes raw material for a paper machine, so the recycled fibre line needs to operate in accordance with the paper machine production. Due to this, production speed may vary greatly, and it may be necessary to control it. In other words, even though the flow of the recycled fibre pulp through the recycled fibre process is sped up, it is possible, by means of a change in the chemical and/or mechanical processing, to make sure that this does not affect the quality of the end-product at all, or the effect is at least not worse than a predefined effect. In addition to this, the shutdowns and start-ups of the product line need to be done quickly and in a controlled manner. This means that even though the preparations for a shutdown or start-up have been initiated, the quality of the end-product remains constant. Quality means that the raw material required by the paper machine has to meet predefined requirements that may relate to brightness of pulp, quantity of ink and dirt spots, and, today more and more, the level of filler. In addition to the desired level, it is required that quality variation remain within given limits. In modern production lines, suitable adjustment and control sequences may be programmed into the automation system to control production speed. With a multivariable controller, it is possible to determine the amount of outgoing agent by measuring the amount of incoming recycled fibre pulp into the process, by simulating the flow of recycled fibre pulp through the process without reject removal, by measuring the amount of outgoing recycled fibre pulp from the recycled fibre line, and by determining the amount of exited recycled fibre pulp from the difference between the simulated rejectless output and the simultaneously measured output. In simulation, it may be necessary to take the process dynamics into account and to synchronise the results.

Because recycling may be part of the process, reject flows may be controlled in such a manner that the reject flows of both the first and second flotation cells are balanced between each other.

Figure 6 shows a block diagram of process control. The ingoing quantities, or control quantities, of the process 600 may be measured with a measuring device 604 and, correspondingly, the outgoing quantities, or adjusted quantities, of the process 600 may be measured with a measuring device 612 at different points in time. The measurements of the measuring devices 604, 612 may be independent under the control of the automation system. The measurements may be taken at intervals of a few seconds, for example. The measuring results may be processed and refined, for instance filtered, in measuring units 608, 614 for further processing. The measuring signals of measuring units 608, 614 and the adjustment signals of regulators 606 and actuators 602 may be fed for further processing into a signal-processing unit 610 that may generate from the information in the received signals an operating point of the process. An operating point of the process depicts the state of the process at each point of time. The state of the process may be normal, high or low production, shutdown, start-up, failure, or a calculation result defined and described mathematically in a more exact manner and based on models. The signal-processing unit 610 may feed a signal depicting the operating point, adjustment signals, and/or measuring signals to an update unit of process models 620 that may update the process model on the basis of the received signals. The updated process model may be stored in a memory 624 that acts as a process model storage and in which the process models are stored as step-response models, impulse models, transfer function models, or the like. The process models may also be conversion models generated using the convolutional integral of an impulse response, step response, or the response of another predefined signal. These include models generated with a Laplace, Fourier, and z transformation, for instance.

The signal-processing unit 626 may generate a prediction depicting future process behaviour by using the process model received from the memory 624 and measuring results (blocks 608 and 614), assuming that process control is not altered. The measuring information may have been pre-processed in an initial state converter 622, the purpose of which is to generate adjusted quantities depicting the output of the process and indicating the behaviour of the process when controlled by optimisation. These quantities include the amount of removed ink calculated as a difference between the feed and accept of the flotation step, and the proportion of removed ink further processed therefrom. Correspondingly, the control quantities of the process may have been modified in block 618 and fed into the signal-processing unit 626. An example of a control quantity may be a dose refined from the flow data "l/s" of a chemical, whose unit is "g/tn" (grams per ton, ton 1000 kg) or an even more complex dose of an effective chemical calculated from the flows of two chemicals. The signal-processing unit 626 then generates predictions from the adjusted quantities depicting the behaviour of the process by means of a process model. The prediction may predict the behaviour of the adjusted quantities during the next 5 to 50 minutes, for instance, assuming no control changes are made. A deviation unit 628 may determine by means of predictions, process models, and predefined targets a correction requirement for the initial state of the process (adjusted quantities) for a corresponding future period of time. The correction requirement information may be fed into an optimisation unit 632, which performs process control optimisation according to the process target, constraints, and costs. According to the given conditions, optimisation optimises the correction need by calculating for the control quantities one or more correction changes for the selected future points of time (e.g. immediately, after 1 minute, 2 minutes, 4 minutes, and 8 minutes).

The optimisation unit 632 defines by means of a cost function and constraints an optimised control signal for the next point of time. A unit 630 may correct the prevailing control whose state may be altered in the modifier 618 to suit the control parameter unit 630, and define new control parameters that may be converted in a set value converter 616 into a set value signal that in turn is suitable for adjusting the regulators 606 and actuators 602 in the input of the process 600. It is then also possible to check that any limits set on the set values are not exceeded. Process adjustment may be done less frequently than the measurements. The regulators and actuators include the conveyor belt supplying raw material to the process, control valves affecting the level and controlling the flow of pulp or water, control valves of one or more chemicals, compressor supplying air, nozzle supplying air, rotor mixing the recycled pulp in the flotation cell, etc. The controller 634 may be thought to comprise blocks 610, and 616 to 632.

The actual optimisation in the optimisation unit 632 may use different quantities than the measurements. Therefore, it is possible to make changes that adapt the quantities of the multivariable controller to the measured quantities. For instance, the measurement may be made on a flow "litres per second" (l/s) that may be converted for the controller into "grams of chemical per ton of paper" (g/tn).

Let us now examine this type of control by means of the following example. The controller may comprise an optimiser 632 that may generate by means of predictions **v** and **u** and targets **r, p** (**r** is the target of the output quantities and **p** is the target of control quantities) may generate at least one optimised control quantity **u** ($\Delta$**u**) to control the process 600. The optimiser may be based on a cost function J that may be mathematically presented for instance as follows:

$$J1 = \sum_{k=1}^{K1} \sum_{j=N1}^{N2} \left[ w_{kj} \left( v_{kj} - r_{kj} \right) \right]^2 ,$$

$$J2 = \sum_{k=1}^{K2} \sum_{j=1}^{M} \left[ b_{kj} \left( p_{kj} - u_{kj} \right) \right]^2 , \qquad (7)$$

$$J3 = \sum_{k=1}^{K2} \sum_{j=1}^{M} \left[ c_{kj} \left( \Delta u_{kj} \right) \right]^2 ,$$

$$J = J1 + J2 + J3,$$

wherein i, j, and k are indexes, K1 refers to the number of output quantities belonging to optimisation in numeric calculation, N1 is a time instant that is N1 measuring intervals to the future from the present moment, N2 is a time instant that is N2 measuring intervals to the future from the present moment, M is a time instant that is M adjustment intervals to the future from the present moment, $r_{kj}$ is the target of an output quantity, $p_{kj}$ is the desired control quantity, $\Delta u_{kj}$ is a change of the control quantity, and $w_{kj}$, $b_{kj}$, and $c_{kj}$ are weighting coefficients. The controller tries to select the control quantity and the output quantity obtained thereby in such a manner that the cost function J is minimised, in other words, that an as small value as possible is found for the cost function J. In the first term J1, a weighted difference is formed between target **r** and predicted output quantity **v.** In the second term J2, a weighted difference may be formed between target control quantity **p** and the control quantity **u** to be implemented. By using the third term J3, it is possible also to take into consideration the change $\Delta$**u** of control quantity **u** and put a penalty on it with coefficient **c.** Control quantity u may also be restricted for instance by not allowing control quantity $u_i$ to be larger than $u_{imax}$. and/or control quantity $u_i$ to be smaller than $u_{imin}$, i.e. for control quantity $u_i$ $u_{imin} \leq u_i \leq u_{imax}$ may apply. Other quantities may naturally also be taken into consideration in the cost function. Optimisation may optimise flows into reject and/or accept, such as water, ink, ash, fibres, etc., or their proportion of the total flow at each operating point that may change continuously.

The multivariable model of the process transfer function may be generally presented for instance as follows:

$$\begin{bmatrix} agentcont1 \\ \vdots \\ agentcont\, N \end{bmatrix} = \begin{bmatrix} G_{11} & \cdots & G_{1N} \\ & \vdots & \\ G_{M1} & \cdots & G_{MN} \end{bmatrix} \bullet \begin{bmatrix} mech1 \\ \vdots \\ mech\, P \\ Che1 \\ \vdots \\ CheK \end{bmatrix}, \qquad (8)$$

wherein agentcont1 to agentcontN refer to the contents, amounts, proportions, or flows of the agents (such as fibres, ink, ash, water, etc.) in the recycled fibre pulp with each agent marked with indexes 1 to N, elements $G_{11}$ to $G_{MN}$ refer to M x N transfer function in a transfer function matrix, mech1 to mechP refer to various mechanical operations in the flotation cell with different mechanical operations marked with indexes 1 to P, Che1 to CheK refer to the dosage of chemical agents (contents, amounts, or proportions in the recycled fibre pulp) and different chemical agents are marked with indexes 1 to K.

The following is a simple example of a multivariable model:

$$\begin{bmatrix} a_a \\ ERIC_a \end{bmatrix} = \begin{bmatrix} G_1 & G_3 & G_5 \\ G_2 & G_4 & G_6 \end{bmatrix} \cdot \begin{bmatrix} h_{KK\_2nd} \\ Q_{soap} \\ a_i \end{bmatrix} \qquad (9)$$

wherein $a_a$ is the ash content in the accept of the primary cell, $ERIC_a$ is the ink content in the accept of the primary cell, $h_{KK\_2nd}$ is the level of the foam collection tray of the secondary cell, $Q_{soap}$ is the dosage of sodium soap into the feed of the primary cell, and $a_i$ is the ash content in the feed flow of the primary cell. Laplace-transformed transfer functions $G_1$ to $G_6$ may be for instance as follows:

$$G_1 = \frac{-0{,}165 \cdot (14{,}29 \cdot s + 1)}{(2{,}86 \cdot s + 1) \cdot (3{,}33 \cdot s + 1)}$$, which refers to the effect of level on the ash content,

$$G_2 = \frac{-15{,}1 \cdot (6{,}67 \cdot s + 1)}{(1{,}43 \cdot s + 1) \cdot (1{,}67 \cdot s + 1)}$$, which refers to the effect of level on the ink content,

$$G_3 = \frac{-6{,}5}{(2{,}1 \cdot s + 1)}$$, which refers to the effect of the sodium soap dosage on the ash content,

$$G_4 = \frac{-71{,}7}{(1{,}5 \cdot s + 1)}$$, which refers to the effect of the sodium soap dosage on the ink content,

$$G_5 = \frac{-0{,}64}{(2{,}8 \cdot s + 1)} \cdot e^{-0{,}7 \cdot s}$$, which refers to the effect of the feed material ash content on the accept ash content, and

$$G_6 = \frac{232 \cdot (9{,}1 \cdot s + 1)}{(0{,}43 \cdot s + 1) \cdot (0{,}22 \cdot s + 1)}$$, which refers to the effect of the feed material on the accept ink content.

In the present solution, it is thus possible to control all important agents and their reject and accept contents simultaneously and in parallel by weighting the significance of each agent with a selected cost function and limiting it with a possible constraint. These controlled agents include removal of ink, ash, and fibres. In addition, it is possible to control the amount of outgoing water. Thus it is possible to establish with the multivariable controller at least one of the following on the basis of a process model: an estimate on the outgoing water and an estimate on the outgoing fibre proportion, and to alter process control so that at least one of these estimates is minimised. The adjustable quantities are controlled by setting the control quantities to the values established by optimisation. The control quantities may include dosage of a frother, dosage of a collector, and dosage of a depressant, and along with these, mechanical quantities controlling flotation, such as level of the flotation cell, amount of air (quantity of air bubbles) in the flotation machine, average size of air bubbles, and the rotation speed of a possible rotor.

It is possible to determine the nature of each chemical from the available chemicals and possibly to make new calculated chemicals, such as calcium soap in the feed, and to define their models for control.

Mechanical quantities controlling flotation may be controlled with the multivariable controller simultaneously and in parallel within the flotation step. If, however, it is necessary to balance the operation of different parts of the process during adjustment, it may be done as an action external to the adjustment. Thus, the levels of the first and second flotation machines are controlled in parallel (in other words, using simultaneous proportional control changes). If the second flotation machine encounters constraints, such as the limits of other automation or set by the personnel running the process, the adjustment may be continued with adjustable equipment. It is common that a significant part of optimisations are performed in an environment defined by constraints, in which one or more control quantities have encountered a control limit and cannot be changed by optimisation.

When calculating the amount of removed ash, control may take into consideration the nature of the process and its numerous circulations. When calculating the amount of removed ink, it is thus possible to calculate or simulate ink flow through the process without removing ink, and the amount of removed ink may only be calculated from this simulated ink amount.

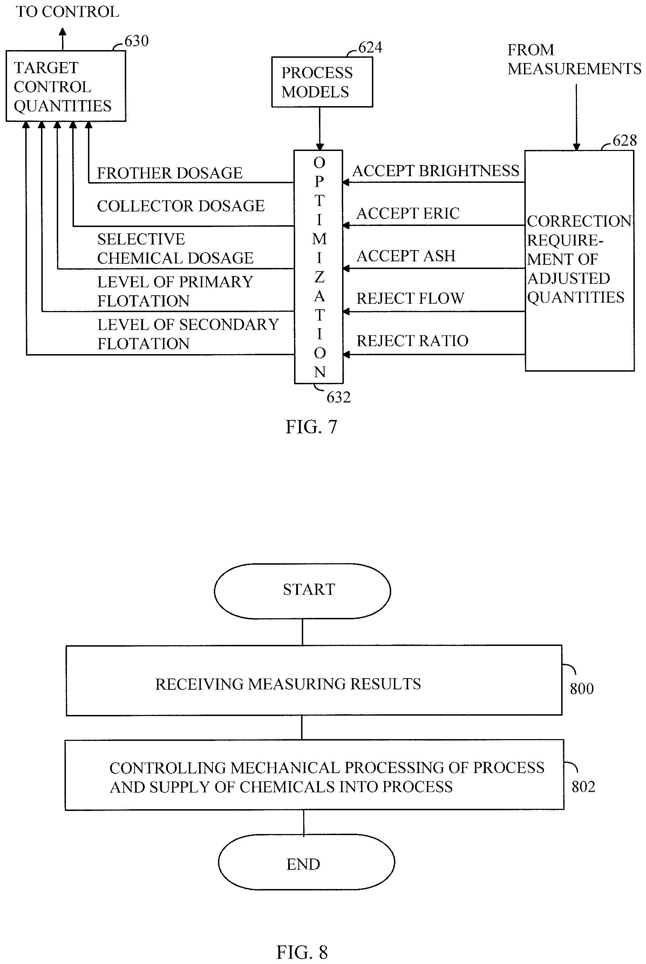

Figure 7 shows an embodiment of optimisation. In this, a deviation unit 628 defines the correction requirement of adjustable quantities. In this example, there are five adjustable quantities: brightness of accept, ERIC of accept, ash of accept, reject flow, and reject ratio. Brightness of accept is used to measure the general brightness of the recycled fibre pulp, which is influenced by fibres, ink, and ash, for instance. The ERIC result of accept measures the ink content of the recycled fibre pulp, ash of accept measures the ash content of the recycled fibre pulp accepted for further processing. Reject flow measures the amount of recycled fibre pulp that is rejected from further processing. Reject ratio in turn measures the ratio of primary flotation reject and total reject or, for instance, the ratio of the ERIC result of reject or ash result 348 and the ERIC result of new feed or ash proportion value 304. The optimisation unit 632 optimises by means of process models 624 and the change requirement of the adjustable quantities the control quantities that affect the adjustable quantities. In this example, there are five control quantities: frother dosage, collector dosage, selective chemical dosage, level of primary flotation (flotation machine 310), and level of secondary flotation (flotation machine 316). Control may thus change or maintain the chemical processing in which the frother dosage affects the flotation performed in the flotation machine, collector dosage affects the hydrophobicity of particles, and selective chemical dosage contains at least one depressant or activator that affects the hydrophilicity of a particle. Control may also change or maintain the mechanical processing which affects the level of the primary and secondary flotation. Levels in turn affect the amount of reject and accept.

Figure 8 shows a flow chart of the method. In step 800, at least two measuring results, of which at least one relates to accept measurement and at least one relates to reject measurement, are received from the recycled fibre line to multivariable control. In step 802, multivariable control controls, on the basis of at least one accept measuring result and at least one reject measuring result, the mechanical processing of the flotation process and the supply of at least one chemical affecting flotation into the recycled fibre process. The multivariable controller adjusts on the basis of said at least two measuring results the supply of at least one chemical affecting flotation and the mechanical processing of the flotation step.

Let us yet examine the adjustment of the process 600 by means of Figures 6 and 8. Step 800 may be timed to begin at 5-second intervals, for example. It is then possible to make measurements (blocks 604, 608, 612, 614), determine the operating point (block 610), and define new adjusted quantities and control quantities (blocks 622 and 618) by means of the measuring results and the new operating point. After optimisation (block 632), the new control quantities may be converted to set values of control circuits (blocks 630 and 616).

Step 802 may in turn be timed to begin at 30-second intervals. It is then possible to determine by means of the new operating point the models to be used in optimisation (block 620) and to store them (block 624). Predictions of the adjusted quantities may be generated by means of measuring results and the operating point (block 626). A correction requirement of the adjustable quantities may be established by means of the predictions and targets of the adjustable quantities (block 628). The control quantities may be optimised on the basis of constraints and a cost function (block 632). Finally, the targets of the controllable quantities may be established (block 630).

The controller may be a computer comprising one or more processors, memory, and software, and the present method may be a computer program stored in the memory of the computer. Alternatively, the controller may at least partly be implemented as a hardware solution by means of separate logic components or one or more application-specific integrated circuits (ASICs).

The method may be a computer program product installable on the controller. This computer process is according to the present method. The computer program product may be stored on a distribution medium of a computer program. The distribution medium is readable by a computer running the program. The distribution medium may be any known medium with which a computer program is distributed from a manufacturer/vendor to the end-user.

Even though the invention has above been described with reference to the examples according to the attached drawings, it is clear that the invention is not limited to them, but may be modified in many ways within the scope of the attached claims.

## Claims

1. A control method of a recycled fibre flotation process (102,106) comprising the steps of
   receiving (800) from a recycled fibre line at least two measuring results, at least one of which relates to accept measurement and at least one to reject measurement,
   controlling (802) with multivariable control on the basis of said at least one accept-related measuring result and said at least one reject-related measuring result the mechanical processing of the flotation process and the supply of at least one chemical affecting flotation into the recycled fibre process, and
   controlling ink content with multivariable control by means of the supply of at least one chemical affecting flotation and reducing the effect of frother.

2. A method as claimed in claim 1, **characterised by** controlling with multivariable control the supply of at least one chemical affecting flotation and the mechanical processing of the flotation process to adjust reject and accept.

3. A method as claimed in claim 1, **characterised by** controlling ink content with multivariable control by means of the supply of at least one chemical affecting flotation and the mechanical processing of the flotation process in at least one of the following: flotation reject, flotation accept, accept returned to flotation (348).

4. A method as claimed in claim 1, **characterised by** controlling ash content with multivariable control by means of the supply of at least one chemical affecting flotation and the mechanical processing of the flotation process in at least one of the following: flotation reject, flotation accept, accept returned to flotation (348).

5. A method as claimed in claim 1, **characterised by** controlling fibre content with multivariable control by means of the supply of at least one chemical affecting flotation and the mechanical processing of the flotation process in at least one of the following: flotation reject, flotation accept, accept returned to flotation (348).

6. A method as claimed in claim 1, **characterised by** establishing for the purpose of control with multivariable control the quantity of removed recycled fibre pulp
by receiving measuring information on the amount of recycled fibre pulp entering the flotation process,
by simulating the flow of recycled fibre pulp through the flotation process without removing the rejects,
by receiving measuring information on the amount of recycled fibre pulp exiting the flotation process, and
by establishing the amount of outgoing recycled fibre pulp from the difference of the simulated rejectless output and the simultaneously measured output.

7. A method as claimed in claim 1, **characterised by** receiving to multivariable control a measuring result depicting the brightness of accept, a measuring result depicting the ink quantity of accept, a measuring result depicting the ash content of accept, a measuring result depicting the reject flow proportion, and a measuring result depicting the reject ratio, and controlling with multivariable control simultaneously the dosage of the frother, collector, and selective chemical, and the level of primary and secondary flotation.

8. A recycled fiber line comprising a controller for a recycled fibre process, **characterised in that**
the controller is a multivariable controller (118, 120, 122, 124, 634) that is arranged to receive from a recycled fibre line at least two measuring results, at least one of which relates to accept measurement and at least one to reject measurement, and
the multivariable controller (118, 120, 122, 124, 634) is arranged to control on the basis of said at least one accept-related measuring result and said at least one reject-related measuring result the mechanical processing of the flotation process and the supply of at least one chemical affecting flotation into the recycled fibre process wherein the multivariable controller is arranged to control ink content with multivariable control by means of the supply of at least one chemical affecting flotation and reducing the effect of frother.

9. A recycled fiber line as claimed in claim 8, **characterised in that** the multivariable controller (118, 120, 122, 124, 634) is arranged to control the supply of at least one chemical affecting flotation and the mechanical processing of the flotation process to adjust the flotation reject and accept.

10. A recycled fiber line as claimed in claim 8, **characterised in that** the multivariable controller (118, 120, 122, 124, 634) is arranged to control ink content by means of the supply of at least one chemical affecting flotation and the mechanical processing of the flotation process in at least one of the following: flotation reject, flotation accept, accept returned to flotation (348).

11. A recycled fiber line as claimed in claim 8, **characterised in that** the multivariable controller (118, 120, 122, 124, 634) is arranged to control ash content by means of the supply of at least one chemical affecting flotation and the mechanical processing of the flotation process in at least one of the following: flotation reject, flotation accept, accept returned to flotation (348).

12. A recycled fiber line as claimed in claim 8, **characterised in that** the multivariable controller (118, 120, 122, 124, 634) is arranged to receive the fibre quantity measured from reject with a fractionator, which represents the quantity of the removed fibre proportion.

13. A recycled fiber line as claimed in claim 8, **characterised in that** the multivariable controller (118, 120, 122, 124, 634) is arranged to establish with the multivariable controller (118, 120, 122, 124, 634) for the purpose of control the amount of removed recycled fibre pulp,
by receiving measuring information on the amount of recycled fibre pulp entering the flotation process (102, 106),
by simulating the flow of recycled fibre pulp through the flotation process (102, 106) without removing the rejects,

by receiving measuring information on the amount of recycled fibre pulp exiting the flotation process (102, 106), and by establishing the amount of outgoing recycled fibre pulp from the difference of the simulated rejectless output and the simultaneously measured output.

14. A recycled fiber line as claimed in claim 8, **characterised in that** the multivariable controller (118, 120, 122, 124, 634) is arranged to receive a measuring result depicting the brightness of accept, a measuring result depicting the ink quantity of accept, a measuring result depicting the ash content of accept, a measuring result depicting the reject flow proportion, and a measuring result depicting the reject ratio, and
the multivariable controller is arranged to control simultaneously the dosage of the frother, collector, and selective chemical, and the level of primary and secondary flotation.

15. The method according to claim 1, **characterised in that** the recycled fibre process comprises at least one flotation process (102, 106) and at least one multivariable controller (118, 120, 122, 124, 634) and at least two measuring devices (108 to 116, 60, 608, 612, 614),
of which at least one measuring device (108 to 116, 60, 608, 612, 614) is arranged to measure at least at one recycled fibre process measuring point (302, 304, 320 to 342) at least one accept-related measuring result,
at least one other measuring device (108 to 116, 60, 608, 612, 614) is arranged to measure at least at one recycled fibre process measuring point (302, 304, 320 to 342) at least one reject-related measuring result,
the multivariable controller (118, 120, 122, 124, 634) is arranged to receive the at least two measuring results measured by said at least two measuring devices (108 to 116, 60, 608, 612, 614), and
the multivariable controller (118, 120, 122, 124, 634) is arranged to control on the basis of at least one accept-related measuring result and at least one reject-related measuring result the mechanical processing of the flotation process (102, 106) and the supply of at least one chemical affecting flotation into the recycled fibre process.

16. The method according to claim 1, **characterised in that**
the flotation process (102, 106) contains at least one flotation machine (310, 316) and at least one multivariable controller (118, 120, 122, 124, 634) that is arranged to receive at least two measuring results, of which at least one is related to accept measurement and at least one is related to reject measurement, and
the multivariable controller (118, 120, 122, 124, 634) is arranged to control on the basis of the at least one accept-related measuring result and at least one reject-related measuring result the mechanical processing of the flotation machine (102, 106, 310, 316) and the supply of at least one chemical affecting flotation.

**Patentansprüche**

1. Steuerverfahren eines Flotationsprozesses (102, 106) einer recycelten Faser, das die Schritte umfasst
Empfangen (800) von zumindest zwei Messergebnissen aus einer Recycelten-Faser-Leitung, wobei zumindest eines davon eine Annahmemessung und zumindest eines eine Ablehnungsmessung betrifft,
Steuern (802) mit multivariabler Steuerung auf der Grundlage von diesem zumindest einen Annahme-betreffendem Messergebnis und diesem zumindest einen Ablehnungs-betreffendem Messergebnis des mechanischen Prozessierens des Flotationsprozesses und der Zufuhr von zumindest einer Chemikalie, die die Flotation beeinflusst, in den Prozess einer recycelten Faser, und
Steuern des Tintengehalts mit multivariabler Steuerung mittels der Zufuhr von zumindest einer Chemikalie, die die Flotation beeinflusst und den Effekt des Schäumers reduziert.

2. Verfahren nach Anspruch 1, **gekennzeichnet durch** das Steuern mit multivariabler Steuerung der Zufuhr von zumindest einer Chemikalie, die die Flotation beeinflusst, und des mechanischen Prozessierens des Flotationsprozesses, um das Ablehnen und die Annahme einzustellen.

3. Verfahren nach Anspruch 1, **gekennzeichnet durch** das Steuern des Tintengehalts mit multivariabler Steuerung mittels der Zufuhr von zumindest einer Chemikalie, die die Flotation beeinflusst, und des mechanischen Prozessierens des Flotationsprozesses, bei zumindest einem der Folgenden: Flotationsablehnung, Flotationsannahme, Annahme zurück zur Flotation (348).

4. Verfahren nach Anspruch 1, **gekennzeichnet durch** das Steuern des Aschegehalts mit multivariabler Steuerung mittels der Zufuhr von zumindest einer Chemikalie, die die Flotation beeinflusst, und des mechanischen Prozessierens des Flotationsprozesses, bei zumindest einem der Folgenden: Flotationsablehnung, Flotationsannahme, Annahme zurück zur Flotation (348).

**5.** Verfahren nach Anspruch 1, **gekennzeichnet durch** das Steuern des Fasergehalts mit multivariabler Steuerung mittels der Zufuhr von zumindest einer Chemikalie, die die Flotation beeinflusst, und des mechanischen Prozessierens des Flotationsprozesses, bei zumindest einem der Folgenden: Flotationsablehnung, Flotationsannahme, Annahme zurück zur Flotation (348).

**6.** Verfahren nach Anspruch 1, **gekennzeichnet durch** das Ermitteln der Menge des entfernten recycelten Faserzellstoffs zum Zweck des Steuerns mit multivariabler Steuerung
**durch** Empfangen von Messinformationen bezüglich der Menge an recyceltem Faserzellstoff, die in den Flotationsprozess eingeht,
**durch** Simulieren des Flusses an recyceltem Faserzellstoff **durch** den Flotationsprozess ohne Entfernen der Ablehnungen,
**durch** Empfangen von Messinformationen bezüglich der Menge an recyceltem Faserzellstoff, die den Flotationsprozess verlässt, und
**durch** Ermitteln der Menge an abgehendem recyceltem Faserzellstoff aus der Differenz des simulierten Ausstoßes ohne Ablehnung und des gleichzeitig gemessenen Ausstoßes.

**7.** Verfahren nach Anspruch 1, **gekennzeichnet durch** das Empfangen, um multivariabel zu steuern, eines Messergebnisses, das die Helligkeit der Annahme beschreibt, eines Messergebnisses, das die Tintenmenge der Annahme beschreibt, eines Messergebnisses, das den Aschegehalt der Annahme beschreibt, eines Messergebnisses, das das Ablehnungsflussverhältnis beschreibt, und eines Messergebnisses, das das Ablehnungsverhältnis beschreibt, und das gleichzeitige Steuern mit multivariabler Steuerung der Dosierung des Schäumers, Kollektors und der selektiven Chemikalie, und des Niveaus an primärer und sekundärer Flotation.

**8.** Recycelte-Faser-Leitung, die eine Steuerung für einen Prozess einer recycelten Faser umfasst, **dadurch gekennzeichnet, dass**
die Steuerung eine multivariable Steuerung (118, 120, 122, 124, 634) ist, die angeordnet ist, um zumindest zwei Messergebnisse aus einer Recycelten-Faser-Leitung zu empfangen, wobei zumindest eines davon eine Annahmemessung und zumindest eines eine Ablehnungsmessung betrifft, und
die multivariable Steuerung (118, 120, 122, 124, 634) angeordnet ist, um auf der Grundlage von diesem zumindest einen Annahme-betreffenden Messergebnis und diesem zumindest einem Ablehnungs-betreffenden Messergebnis das mechanische Prozessieren des Flotationsprozesses und die Zufuhr von zumindest einer Chemikalie, die die Flotation beeinflusst, in den Prozess einer recycelten Faser zu steuern, wobei die multivariable Steuerung angeordnet ist, um den Tintengehalt mit multivariabler Steuerung mittels der Zufuhr von zumindest einer Chemikalie, die die Flotation beeinflusst und den Effekt des Schäumers reduziert, zu steuern.

**9.** Recycelte-Faser-Leitung nach Anspruch 8, **dadurch gekennzeichnet, dass** die multivariable Steuerung (118, 120, 122, 124, 634) angeordnet ist, um die Zufuhr von zumindest einer Chemikalie, die die Flotation beeinflusst, und das mechanische Prozessieren des Flotationsprozesses zu steuern, um die Flotationsablehnung und -annahme einzustellen.

**10.** Recycelte-Faser-Leitung nach Anspruch 8, **dadurch gekennzeichnet, dass** die multivariable Steuerung (118, 120, 122, 124, 634) angeordnet ist, um den Tintengehalt mittels der Zufuhr von zumindest einer Chemikalie, die die Flotation beeinflusst, und des mechanischen Prozessierens des Flotationsprozesses zu steuern, bei zumindest einem der Folgenden: Flotationsablehnung, Flotationsannahme, Annahme zurück zur Flotation (348).

**11.** Recycelte-Faser-Leitung nach Anspruch 8, **dadurch gekennzeichnet, dass** die multivariable Steuerung (118, 120, 122, 124, 634) angeordnet ist, um den Aschegehalt mittels der Zufuhr von zumindest einer Chemikalie, die die Flotation beeinflusst, und des mechanischen Prozessierens des Flotationsprozesses zu steuern, bei zumindest einem der Folgenden: Flotationsablehnung, Flotationsannahme, Annahme zurück zur Flotation (348).

**12.** Recycelte-Faser-Leitung nach Anspruch 8, **dadurch gekennzeichnet, dass** die multivariable Steuerung (118, 120, 122, 124, 634) angeordnet ist, um die Fasermenge zu empfangen, die aus der Ablehnung mit einem Fraktionierer gemessen wird, welche die Menge des entfernten Faserverhältnisses darstellt.

**13.** Recycelte-Faser-Leitung nach Anspruch 8, **dadurch gekennzeichnet, dass** die multivariable Steuerung (118, 120, 122, 124, 634) angeordnet ist, um mit der multivariablen Steuerung (118, 120, 122, 124, 634) die Menge an entferntem recycelten Faserzellstoff zum Zweck des Steuerns zu ermitteln,
durch Empfangen von Messinformationen bezüglich der Menge an recyceltem Faserzellstoff, die in den Flotationsprozess eingeht,

durch Simulieren des Flusses an recyceltem Faserzellstoff durch den Flotationsprozess ohne Entfernen der Ablehnungen,

durch Empfangen von Messinformationen bezüglich der Menge an recyceltem Faserzellstoff, die den Flotationsprozess verlässt, und

durch Ermitteln der Menge an abgehendem recyceltem Faserzellstoff aus der Differenz des simulierten Ausstoßes ohne Ablehnung und des gleichzeitig gemessenen Ausstoßes.

14. Recycelte-Faser-Leitung nach Anspruch 8, **dadurch gekennzeichnet, dass** die multivariable Steuerung (118, 120, 122, 124, 634) angeordnet ist, um ein Messergebnis, das die Helligkeit der Annahme beschreibt, ein Messergebnis, das die Tintenmenge der Annahme beschreibt, ein Messergebnis, das den Aschegehalt der Annahme beschreibt, ein Messergebnis, das das Ablehnungsflussverhältnis beschreibt, und ein Messergebnis, das das Ablehnungsverhältnis beschreibt, zu empfangen, und

wobei die multivariable Steuerung angeordnet ist, um gleichzeitig die Dosierung des Schäumers, Kollektors und der selektiven Chemikalie, und das Niveau an primärer und sekundärer Flotation zu steuern.

15. Verfahren nach Anspruch 1, **dadurch gekennzeichnet, dass** der Prozess einer recycelte Faser zumindest einen Flotationsprozess (102, 106) und zumindest eine multivariable Steuerung (118, 120, 122, 124, 634) und zumindest zwei Messvorrichtungen (108 bis 116, 60, 608, 612, 614) umfasst,

von welchen zumindest eine Messvorrichtung (108 bis 116, 60, 608, 612, 614) angeordnet ist, um zumindest an einem Prozessmessungspunkt einer recycelten Faser (302, 304, 320 bis 342) zumindest ein Annahmebetreffendes Messergebnis zu messen,

zumindest eine andere Messvorrichtung (108 bis 116, 60, 608, 612, 614) angeordnet ist, um zumindest an einem Prozessmessungspunkt einer recycelten Faser (302, 304, 320 bis 342) zumindest ein Ablehnungsbetreffendes Messergebnis zu messen,

wobei die multivariable Steuerung (118, 120, 122, 124, 634) angeordnet ist, um zumindest zwei Messergebnisse zu empfangen, die durch die zumindest zwei Messvorrichtungen (108 bis 116, 60, 608, 612, 614) gemessen werden, und

die multivariable Steuerung (118, 120, 122, 124, 634) angeordnet ist, um auf der Grundlage von zumindest einem Annahme-betreffenden Messergebnis und zumindest einem Ablehnungs-betreffenden Messergebnis das mechanische Prozessieren des Flotationsprozesses (102, 106) und die Zufuhr von zumindest einer Chemikalie, die die Flotation beeinflusst, in den Prozess einer recycelten Faser zu steuern.

16. Verfahren nach Anspruch 1, **dadurch gekennzeichnet, dass**

der Flotationsprozess (102, 106) zumindest eine Flotationsmaschine (310, 316) und zumindest eine multivariable Steuerung (118, 120, 122, 124, 634) enthält, die angeordnet ist, um zumindest zwei Messergebnisse zu empfangen, von welchen zumindest eines eine Annahmemessung betrifft und zumindest eines eine Ablehnungsmessung betrifft, und

die multivariable Steuerung (118, 120, 122, 124, 634) angeordnet ist, um auf der Grundlage des zumindest einen Annahme-betreffenden Messergebnisses und des zumindest ein Ablehnungs-betreffenden Messergebnisses das mechanische Prozessieren der Flotationsmaschine (102, 106, 310, 316) und die Zufuhr von zumindest einer Chemikalie, die die Flotation beeinflusst, zu steuern.

**Revendications**

1. Procédé de commande d'un processus (102, 106) de flottation de fibres recyclées comprenant les étapes consistant à :

recevoir (800) à partir d'une ligne de production de fibres recyclées au moins deux résultats de mesure, dont au moins un est lié à la mesure de la fraction acceptée et au moins un est lié à la mesure de la fraction rejetée ;

commander (802) avec une commande multivariable sur base dudit au moins un résultat de mesure lié à la fraction acceptée et dudit au moins un résultat de mesure lié à la fraction rejetée, le traitement mécanique du processus de flottation et l'alimentation d'au moins un produit chimique affectant la flottation dans le processus de production de fibres recyclées, et

régler la teneur en encre avec une commande multivariable au moyen de l'alimentation d'au moins un produit chimique affectant la flottation et réduisant l'effet de l'agent moussant.

**2.** Procédé selon la revendication 1, **caractérisé par** la commande avec une commande multivariable de l'alimentation d'au moins un produit chimique affectant la flottation et le traitement mécanique du processus de flottation afin de régler la fraction rejetée et la fraction acceptée.

**3.** Procédé selon la revendication 1, **caractérisé par** le réglage de la teneur en encre avec une commande multivariable au moyen de l'alimentation d'au moins un produit chimique affectant la flottation et le traitement mécanique du processus de flottation dans au moins une des fractions suivantes : la fraction rejetée de la flottation, la fraction acceptée de la flottation, la fraction acceptée renvoyée à la flottation (348).

**4.** Procédé selon la revendication 1, **caractérisé par** le réglage de la teneur en cendres avec une commande multivariable au moyen de l'alimentation d'au moins un produit chimique affectant la flottation et le traitement mécanique du processus de flottation dans au moins une des fractions suivantes : la fraction rejetée de la flottation, la fraction acceptée de la flottation, la fraction acceptée renvoyée à la flottation (348).

**5.** Procédé selon la revendication 1, **caractérisé par** le réglage de la teneur en fibres avec une commande multivariable au moyen de l'alimentation d'au moins un produit chimique affectant la flottation et le traitement mécanique du processus de flottation dans au moins une des fractions suivantes : la fraction rejetée de la flottation, la fraction acceptée de la flottation, la fraction acceptée renvoyée à la flottation (348).

**6.** Procédé selon la revendication 1, **caractérisé par** l'établissement, pour les objets de la commande avec une commande multivariable, la quantité de pâte fibreuse recyclée éliminée en passant par : la réception d'informations de mesure quant à la quantité de pâte fibreuse recyclée pénétrant dans le processus de flottation, la simulation du courant de pâte fibreuse recyclée à travers le processus de flottation sans éliminer la fraction rejetée, la réception d'informations de mesure quant à la quantité de pâte fibreuse recyclée quittant le processus de flottation, et l'établissement de la quantité de pâte fibreuse recyclée évacuée à partir de la différence entre la production simulée sans rejet et la production mesurée de manière simultanée.

**7.** Procédé selon la revendication 1, **caractérisé par** la réception, pour la commande multivariable, d'un résultat de mesure qui représente le degré de blancheur de la fraction acceptée, d'un résultat de mesure représentant la quantité d'encre de la fraction acceptée, d'un résultat de mesure représentant la teneur en cendres de la fraction acceptée, d'un résultat de mesure représentant la proportion d'écoulement de la fraction rejetée, et d'un résultat de mesure représentant le taux de fraction rejetée, et le réglage avec une commande multivariable, de manière simultanée, du dosage de l'agent moussant, de l'agent collecteur et d'un produit chimique sélectif, et du niveau de la flottation primaire et secondaire.

**8.** Ligne de production de fibres recyclées comprenant un contrôleur pour un processus de production de fibres recyclées, **caractérisée en ce que** le contrôleur est un contrôleur multivariable (118, 120, 122, 124, 634) qui est conçu pour recevoir à partir d'une ligne de production de fibres recyclées au moins deux résultats de mesure, dont au moins un est lié à la mesure de la fraction acceptée et au moins un est lié à la mesure de la fraction rejetée ; et le contrôleur multivariable (118, 120, 122, 124, 634) est conçu pour la commande, sur base dudit au moins un résultat de mesure lié à la fraction acceptée et dudit au moins un résultat de mesure lié à la fraction rejetée, le traitement mécanique du processus de flottation et l'alimentation d'au moins un produit chimique affectant la flottation dans le processus de production de fibres recyclées, dans lequel le contrôleur multivariable est conçu pour régler la teneur en encre avec une commande multivariable au moyen de l'alimentation d'au moins un produit chimique affectant la flottation et réduisant l'effet de l'agent moussant.

**9.** Ligne de production de fibres recyclées selon la revendication 8, **caractérisée en ce que** le contrôleur multivariable (118, 120, 122, 124, 634) est conçu pour la commande de l'alimentation d'au moins un produit chimique affectant la flottation et le traitement mécanique du processus de flottation afin de régler la fraction rejetée et la fraction acceptée de la flottation.

**10.** Ligne de production de fibres recyclées selon la revendication 8, **caractérisée en ce que** le contrôleur multivariable (118, 120, 122, 124, 634) est conçu pour le réglage de la teneur en encre au moyen de l'alimentation d'au moins un produit chimique affectant la flottation et le traitement mécanique du processus de flottation dans au moins une des fractions suivantes : la fraction rejetée de la flottation, la fraction acceptée de la flottation, la fraction acceptée renvoyée à la flottation (348).

**11.** Ligne de production de fibres recyclées selon la revendication 8, **caractérisée en ce que** le contrôleur multivariable (118, 120, 122, 124, 634) est conçu pour le réglage de la teneur en cendres au moyen de l'alimentation d'au moins un produit chimique affectant la flottation et le traitement mécanique du processus de flottation dans au moins une des fractions suivantes : la fraction rejetée de la flottation, la fraction acceptée de la flottation, la fraction acceptée renvoyée à la flottation (348).

12. Ligne de production de fibres recyclées selon la revendication 8, **caractérisée en ce que** le contrôleur multivariable (118, 120, 122, 124, 634) est conçu pour recevoir la quantité de fibres mesurée à partir de la fraction rejetée avec un agent de fractionnement, qui représente la quantité de la proportion de fibres éliminées.

13. Ligne de production de fibres recyclées selon la revendication 8, **caractérisée en ce que** le contrôleur multivariable (118, 120, 122, 124, 634) est conçu pour établir, avec le contrôleur multivariable (118, 120, 122, 124, 634), à des fins de commande, la quantité de pâte fibreuse recyclée éliminée, en passant par : la réception d'informations de mesure quant à la quantité de pâte fibreuse recyclée pénétrant dans le processus (102, 106) de flottation, la simulation du courant de pâte fibreuse recyclée à travers le processus (102, 106) de flottation sans élimination de la fraction rejetée, la réception d'informations de mesure quant à la quantité de pâte fibreuse recyclée quittant le processus (102, 106) de flottation, et l'établissement de la quantité de pâte fibreuse recyclée évacuée à partir de la différence entre la production simulée sans rejet et la production mesurée de manière simultanée.

14. Ligne de production de fibres recyclées selon la revendication 8, **caractérisée en ce que** le contrôleur multivariable (118, 120, 122, 124, 634) est conçu pour recevoir un résultat de mesure représentant le degré de blancheur de la fraction acceptée, un résultat de mesure représentant la quantité d'encre de la fraction acceptée, un résultat de mesure représentant la teneur en cendres de la fraction acceptée, un résultat de mesure représentant la proportion d'écoulement rejeté, et un résultat de mesure représentant le taux de traction rejetée, et le contrôleur multivariable est conçu pour le réglage, de manière simultanée, du dosage de l'agent moussant, de l'agent collecteur et d'un produit chimique sélectif, et du niveau de la flottation primaire et secondaire.

15. Procédé selon la revendication 1, **caractérisé en ce que** le processus de production de fibres recyclées comprend au moins un processus (102, 106) de flottation et au moins un contrôleur multivariable (118, 120, 122, 124, 634) et au moins deux dispositifs (108 à 116, 60, 608, 612, 614) de mesure, au moins un dispositif (108 à 116, 60, 608, 612, 614) de mesure étant conçu pour mesurer au moins à un endroit (302, 304, 320 à 342) de mesure du processus de production de fibres recyclées au moins un résultat de mesure lié à la fraction acceptée, au moins un dispositif (108 à 116, 60, 608, 612, 614) de mesure étant conçu pour mesurer au moins à un endroit (302, 304, 320 à 342) de mesure du processus de production de fibres recyclées au moins un résultat de mesure lié à la fraction rejetée, le contrôleur multivariable (118, 120, 122, 124, 634) étant conçu pour recevoir les dit au moins deux résultats de mesure mesurés par lesdits au moins deux dispositifs (108 à 116, 60, 608, 612, 614) de mesure, et le contrôleur multivariable (118, 120, 122, 124, 634) étant conçu pour la commande, sur base d'au moins un résultat de mesure lié à la fraction acceptée et d'au moins un résultat de mesure lié à la fraction rejetée, du traitement mécanique du processus (102, 106) de flottation et de l'alimentation d'au moins un produit chimique affectant la flottation dans le processus de production de fibres recyclées.

16. Procédé selon la revendication 1, **caractérisé en ce que** le processus (102, 106) de flottation contient au moins une machine (310, 316) de flottation et au moins un contrôleur multivariable (118, 120, 122, 124, 634) qui est conçu pour recevoir au moins deux résultats de mesure, dont au moins un est lié à la mesure de la fraction acceptée et au moins un est lié à la mesure de la fraction rejetée, et le contrôleur multivariable (118, 120, 122, 124, 634) est conçu pour la commande, sur base dudit au moins un résultat de mesure lié à la fraction acceptée et dudit au moins un résultat de mesure lié à la fraction rejetée, du traitement mécanique de la machine (102, 106, 310, 316) de flottation et de l'alimentation d'au moins un produit chimique affectant la flottation.

FIG. 1

FIG. 2

FIG. 3

FIG. 4

R

REJECT RATIO [%]

80

50

10

500

502

504

506

5          20

T

FLOTATION TIME [MIN]

FIG. 5

602    604

600

PROCESS

612

608

606
ADJUST

MEASU-
REMENT

OPERATING
POINT    610

614    MEA-
SUREMENT

CON-  616
VERSION

CON-  618
VERSION

MODEL
UPDATE

620

CON-    622
VERSION

634

624
MODELS

626    PRE-
DICTION

CORREC-
TION
REQT    628

TARGET

630

CONTROL
VALUE(S)

632    OPTI-
MISATION

COST FUNCTION
CONSTRAINTS

FIG. 6

TO CONTROL

TARGET
CONTROL
QUANTITIES ⌐630

PROCESS
MODELS ⌐624

FROM
MEASUREMENTS

FROTHER DOSAGE

COLLECTOR DOSAGE

SELECTIVE
CHEMICAL DOSAGE

LEVEL OF PRIMARY
FLOTATION

LEVEL OF SECONDARY
FLOTATION

OPTIMIZATION

ACCEPT BRIGHTNESS

ACCEPT ERIC

ACCEPT ASH

REJECT FLOW

REJECT RATIO

CORRECTION
REQUIRE-
MENT OF
ADJUSTED
QUANTITIES ⌐628

632

FIG. 7

START

RECEIVING MEASURING RESULTS ⌐800

CONTROLLING MECHANICAL PROCESSING OF PROCESS
AND SUPPLY OF CHEMICALS INTO PROCESS ⌐802

END

FIG. 8

**EP 2 074 256 B1**

**REFERENCES CITED IN THE DESCRIPTION**

**Patent documents cited in the description**

- US 2002056531 A1
- EP 1496154 A1
- WO 9508019 A1
- US 6010593 A
- US 5087823 A
- US 20040200778 A1